# EUROPEAN PATENT SPECIFICATION

(11) **EP 2 962 024 B1**
(45) Date of publication and mention of the grant of the patent: **24.07.2019**
(21) Application number: 14709086.4
(22) Date of filing: 21.02.2014
(51) Int. Cl.: F16K 31/126, F16K 7/17, F16K 41/10, F16K 1/34, F16K 7/16, F16K 1/36, F16K 1/38

(54) **DIAPHRAGM VALVE WITH DUAL POINT SEAL AND FLOATING DIAPHRAGM WEB**
MEMBRANVENTIL MIT ZWEIPUNKTDICHTUNG UND SCHWEBENDEM MEMBRANNETZ
SOUPAPE À DIAPHRAGME AVEC JOINT À DOUBLE POINT ET TISSU DE DIAPHRAGME FLOTTANT

(30) Priority: 26.02.2013 US 201361769467 P; 26.02.2013 US 201361769519 P
(43) Date of publication of application: 06.01.2016
(73) Proprietor: Parker-Hannifin Corporation, Cleveland, Ohio 44124 (US)
(72) Inventor: SMITH, Zachary Spencer, Tucson, Arizona 85747 (US); CONNER, Darren Edward, Tucson, Arizona 85705 (US)
(74) Representative: Orr, Robert
(86) International application number: PCT/US2014/017597
(87) International publication number: WO 2014/133887

(56) References cited:
- EP-A1- 0 780 611
- WO-A1-00/60258
- WO-A1-2005/015066
- US-A- 4 044 998
- US-A- 6 123 320
- US-A1- 2006 016 494
- US-A1- 2006 118 752
- US-A1- 2006 145 106
- US-A1- 2008 001 110

## Description

### Field of Invention

The present application relates generally to diaphragm valves, and more particularly, to fluoropolymer valves for use in high purity systems, such as semiconductor manufacturing or other corrosive or high purity applications.

### Background

Various high purity systems, such as systems for manufacturing pharmaceuticals, semiconductors, and the like, use high purity diaphragm valves, such as valves made from fluoropolymers. Typical high purity valves have a valve body with an inlet and an outlet separated by a valve seat and a diaphragm. The diaphragm typically has a central stem for sealing against the valve seat to open and close the valve, and an outwardly extending web that seals the cavity of the valve. One existing valve for such a system includes a tongue and groove seal that acts against the valve seat. This tongue and groove design can produce too many particles for a dynamic seal, and therefore is best suited for static sealing applications.

For high purity systems, it is important for the valve diaphragm to maintain a proper seal against the valve seat. In addition, through the numerous cycles of operation, valve seat wear can occur, which reduces the efficacy of the seal. The lack of an effective seal can reduce valve performance in conventional configurations. In addition, in some circumstances it may be desirable to reduce the thickness of the diaphragm web to increase the valve stroke. A thin diaphragm web, however, is likely to balloon when the valve is pressurized. Some conventional valves incorporate a support structure for reinforcing the diaphragm web as it balloons under pressure. The support structure can be contoured to approximately match the contour of the ballooned diaphragm web, and as the diaphragm web balloons under increased pressure, more of the diaphragm can be pressed into contact with the support surface. The point of contact with the support structure can create an undesirable concentration of stress in the web, which among other drawbacks, may adversely affect the cycle life of the valve.

US Patent No. US-6123320 discloses a sanitary diaphragm valve that includes a generally dome shaped diaphragm having a central boss that can be connected to or driven by a valve actuator. The diaphragm includes an outer peripheral edge and a relatively thin web portion that connects the boss to the outer edge. The web portion is arcuate or dome shaped. The thin web is defined by two different contoured surfaces, one convex and the other concave, formed by two radiuses. A valve body is provided that includes a bowl shaped valve cavity. The valve cavity includes an outer vertical edge to permit cleaning and to eliminate entrapment areas. The valve assembly provides support surfaces for the diaphragm.

International Patent Publication No. WO-2005/015066 discloses a fluid control valve comprising a valve seat and a closing element that cooperates with the valve seat in a specific contact region, and an actuating device. One of the valve seat and the closing element is provided with an elastomeric element, on the side facing the other one of the valve seat and the closing element. At least one of the valve seat and the closing element is provided with a precontact zone in which contact between the valve seat and the closing element is limited to a predetermined partial area of the contact region. The partial area has a predetermined deformation behaviour while applying a predetermined force which counteracts the approach of the closing element and the valve seat.

US Patent No. US-4044998 discloses valve assemblies used for dispensing liquid foods and beverages. The valves each comprise a valve or nozzle body including a valve chamber connected with a lateral inlet passage and an axial outlet passage. A valve seat is formed in the chamber about the outlet passage. In one disclosed valve, the seat is a curved transition surface between the outlet passage and a cylindrical valve chamber. The valve element is in the form of a resilient cup member carried at the end of a rigid stem and adapted to engage the seat. The stem and the cup member are continually spring biased toward the seat by a compression spring which acts between the valve member and a bonnet screwed to the top of the valve body.

European Patent Publication No. EP-0780611 discloses a flow control valve assembly comprising a body assembly having a cavity disposed therein. The body comprises an inlet passage and an outlet passage to permit a fluid or gas flow into or out of the valve cavity. The inlet and outlet passages include openings into the valve cavity. Disposed between the inlet and outlet openings is a curved surface. A fluid or gas flow is controlled through the valve by incrementally engaging a thin, flexible diaphragm along the curved surface of the body to vary the fluid flow resistance between the diaphragm and curved surface.

US Patent Publication No. US-2006/0118752 discloses a loading structure for a valve which comprises: an anti-leak pad defined onto a valve body, a metal diaphragm and a compression member both above the anti-leak pad, a loading unit having an outwardly extended loading seat, a resilient element and a driving element which is above the diaphragm, a central shaft for driving said loading unit, wherein the resilient element is located at said loading seat, the loading seat being for downward or upward moving and compressing the driving element, the loading unit arranged below the resilient element, whereby when the loading unit excessively urges the diaphragm to matingly engage with the anti-leak pad, enabling the counterforce of anti-leak pad to urge the driving element of the loading unit to upwardly compress the resilient element.

US Patent Publication No. US-2006/0016494 discloses a low-flow diaphragm valve having a flexible diaphragm that cooperates with a portion of the valve body to open and close the valve. The diaphragm has a dome for seating in a passage between the inlet and outlet of the valve, the passage being surrounded by an annular ridge for contacting the dome. The diaphragm has one or more ribs for seating against other portions of the body located around the passage. The valve body includes openings to permit fluid to flow through the valve, as well as to permit relatively small particulate matter to flow through. The diaphragm has a first open position and a second open position such that the ribs and openings may perform screening functions to block or restrict particulate matter of relatively large size from flowing to the passage between the dome and the valve body. The ribs and the openings cooperate to perform the blocking function and to prevent an undesirable amount of liquid from passing through the valve even when particulate matter is trapped between one or more of the dome and ribs, on the one hand, and the body on the other hand.

US Patent Publication No. US-2006/0145106 discloses a combined valve constructed by integrating a manual valve operating as a safety mechanism and a pilot valve. When a handle of a knob of the manual valve is in a safety mechanism release position, a valve mechanism can be opened and closed depending on whether or not there is air supply to an operation port. When the handle is in the safety mechanism release position and the valve mechanism is even in a valve open state, the valve mechanism can be forcibly brought to a valve closed state by rotating the handle to a safety mechanism set position. When the handle is in the safety mechanism set position, the valve mechanism can be kept in the valve closed state irrespective of air supply to the operation port.

US Patent Publication No. US-2008/0001110 discloses a compact flow control valve comprising: a valve body made of resin including a first passage formed in the valve body; a valve port communicating with the first passage; and a valve seat formed around the valve port; a valve element movable into contact with and away from the valve seat; a valve chamber formed around the valve seat; a second passage communicating with the valve chamber; and a flow adjustment rod for adjusting a flow rate of a fluid allowed to flow in the valve chamber, wherein the flow adjustment rod is adjustable in position to change an opening degree of the valve element relative to the valve seat for adjusting the flow rate, and the flow control valve further comprises an annular recess formed in an inner periphery of the valve seat formed surrounding the valve port and configured to prevent radial deformation of the valve port when the valve element is moved into contact with the valve seat.

International Patent Publication No. WO-00/60258 discloses a valve with a through-going axial bore, a first spindle axially displaceable in the bore, an elastic/flexible seal placed at the one end surface of the first spindle, and at least two hollow connection branches, each of which connects the valve to an outer coupling. The first spindle, in a first position, forms a first annular sealing surface between the outer surface of the seal and the inner bottom of the valve body which contains the outlet opening. The first spindle lies coaxially inside a second axially displaceable and hollow spindle lying in the bore, the end surface of which forms a second annular sealing surface between the outer surface of the seal and the inner bottom of the valve body at a second position radially away from the first annular sealing surface.

### Summary of Invention

The present invention provides a valve as claimed in claim 1.

Further features of the valve are defined in the dependent claims.

In view of the deficiencies of conventional high purity diaphragm valves, a need exists in the art for an improved diaphragm valve having enhanced valve life, reliability, and performance. The present invention is a high purity valve having enhanced valve life and performance due to a configuration that significantly improves sealing by the diaphragm against the valve seat, and has a diaphragm web configuration by which the diaphragm will exhibit minimal surface stress without constraint or support from a retainer or body. The diaphragm forms a dual point seal against the valve seat for enhanced sealing, and the diaphragm web balloons outward to a natural position without contacting a valve retainer.

The valve, which may be a high purity valve, includes a valve body having an inlet and an outlet separated by a valve seat, and a diaphragm having a central stem that has a first end coupled to a piston for actuating the valve, and a second end that comprises a poppet for engaging the valve seat to close the valve. The poppet forms a dual point seal with the valve seat having at least two points of contact between an annular surface of the poppet and the valve seat. The dual point seal is configured as concentric annular seals when the annular surface of the poppet is pressed against the valve seat. The annular surface of the poppet is a concave surface that provides the dual point seal.

The valve further may include a retainer positioned adjacent the diaphragm, and the diaphragm has a web that extends radially outward from the central stem. The retainer has a surface adjacent the web, and the surface of the retainer is spaced apart from the web such that the web does not contact the surface of the retainer when the valve is pressurized. The web is a flexible web that balloons outwardly in the direction of the retainer to a natural position when the valve is pressurized, thereby minimizing concentrations of stresses on the web.

The valve may further include a housing enclosing an interior portion of the valve, wherein the housing is coupled to the valve body in a manner that seals the interior portion of the valve with an outer portion of the diaphragm. The housing may be coupled to the retainer and the valve body, and the housing compresses an outer portion of the diaphragm between the valve body and the retainer.

These and further features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the terms of the claims appended hereto.

### Brief Description of the Drawings

Fig. 1 is a schematic diagram that depicts an isometric view of an exemplary high purity valve in accordance with embodiments of the present invention.
Fig. 2 is a schematic diagram that depicts a side cross-sectional view of the exemplary high purity valve of Fig. 1, with the valve in the open position.
Fig. 3 is a schematic diagram that depicts a side cross-sectional view of the exemplary high purity valve of Fig. 1, with the valve in the closed position.
Fig. 4 is a schematic diagram depicting a first close-up cross-sectional view of a portion of the valve designated by the circle arrow "4" in Fig. 3, in the vicinity of an annular surface of a valve poppet against a valve seat, with the valve in the closed position.
Fig. 5 is a schematic diagram depicting a second close-up cross-sectional view of a portion of the valve designated by the circle arrow "4" in Fig. 3, in the vicinity of an annular surface of a valve poppet against a valve seat, with the valve in the closed position, the valve portion illustrated in the drawing forming part of a valve which does not fall within the scope of the invention as claimed.
Fig. 6 is a schematic diagram depicting a close-up cross-sectional view of a portion of the valve designated by the circle arrow "6" in Fig. 2, in the vicinity of a web portion with the valve in the open position.
Fig. 7 is a schematic diagram depicting a close-up cross-sectional view of a portion of the valve designated by the circle arrow "7" in Fig. 3, in the vicinity of a web portion with the valve in the closed position.
Fig. 8 is a schematic diagram that depicts a valve diaphragm and diaphragm web when the diaphragm web is subjected to internal pressure within the valve.

### Detailed Description

Embodiments of the present invention will now be described with reference to the drawings, wherein like reference numerals are used to refer to like elements throughout. It will be understood that the figures are not necessarily to scale.

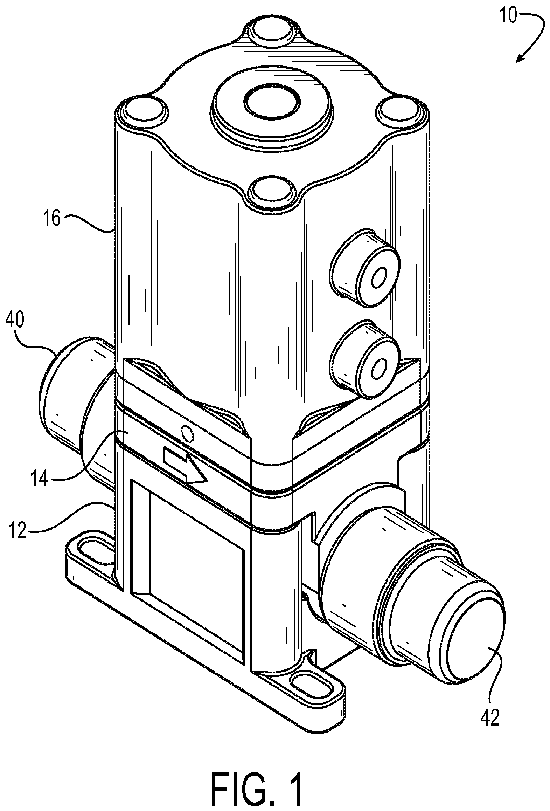

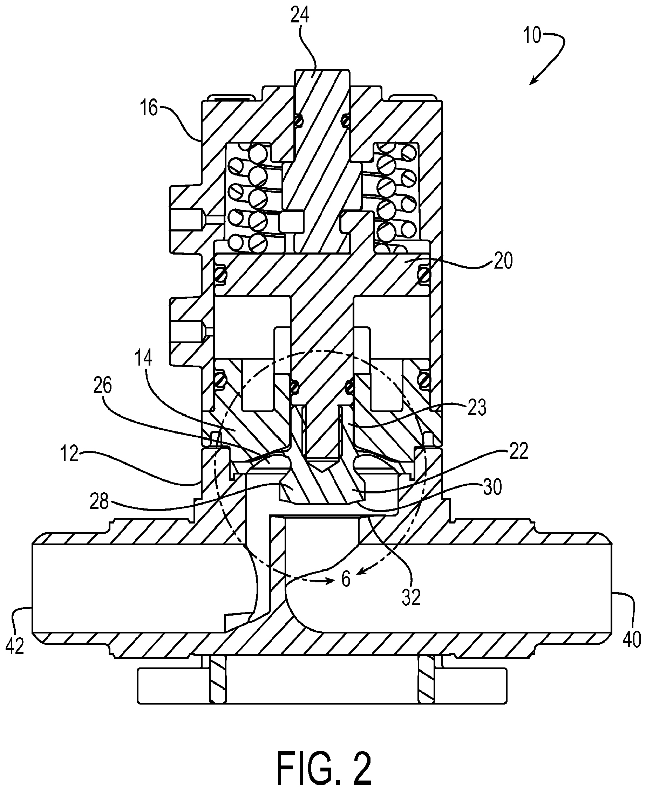

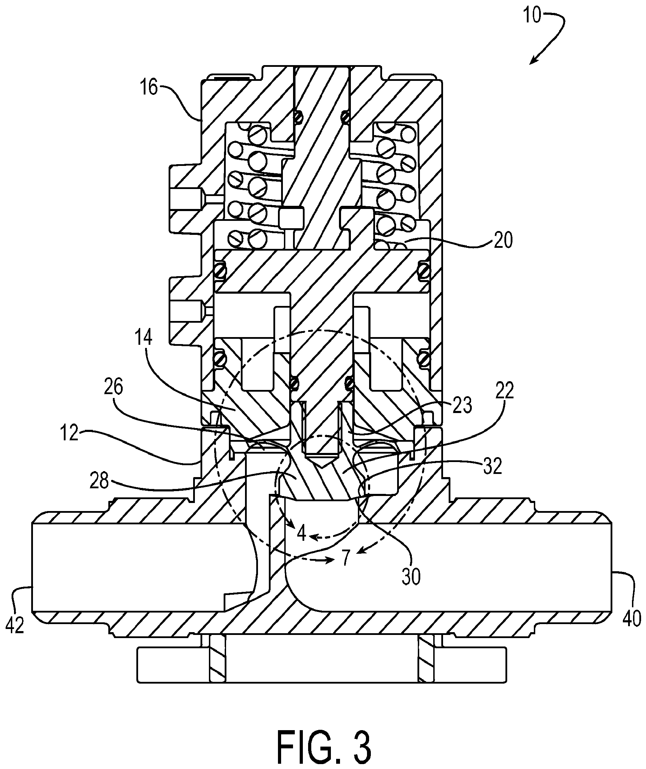

Fig. 1 is a schematic diagram that depicts an isometric view of an exemplary high purity valve 10 in accordance with embodiments of the present invention. Fig. 2 is a schematic diagram that depicts a side cross-sectional view of the exemplary high purity valve 10 of Fig. 1, with the valve in the open position. Fig. 3 is a schematic diagram that depicts a side cross-sectional view of the exemplary high purity valve 10 of Fig. 1, with the valve in the closed position.

Referring to Figs. 1 to 3, the valve 10 includes a valve body 12, a retainer 14, and a housing 16 that are coupled to one another. The housing 16 encloses the valve body 12. Referring more specifically to the cross-sectional views of Figs. 2 and 3, the housing 16 encloses a piston 20 that is coupled at one end to a diaphragm 22 and at the other end to an indicator 24. The indicator 24 can indicate whether the valve is open (indicator raised from the housing surface as seen in Fig. 2) or closed (indicator flush with the housing surface as seen in Fig. 3). The housing 16 encloses an interior portion of the valve, and the housing is coupled to the valve body 12 in a manner that seals the interior portion of the valve with an outer portion of the diaphragm. The housing 16 specifically may be coupled to the retainer 14 and the valve body 12, and the housing compresses an outer portion of the diaphragm between the valve body and the retainer.

The diaphragm 22 seals the valve body 12 to inhibit the escape of fluid from the valve. The diaphragm 22 has a central stem 23 and a radially outwardly extending web 26. One end of the central stem has a poppet 28. The other end of the central stem is coupled to the piston 20, for example, by a threaded connection or other suitable connection. The poppet 28 includes an annular surface 30 for sealing against a valve seat 32. The poppet 28 engages the valve seat 32 to seal the valve when the valve is closed as shown in Fig. 3. The valve further includes and inlet 40 and an outlet 42. When the valve is closed as seen in Fig. 3, the seal of the poppet 28 against the valve seat 32 is configured such that the inlet 40 and outlet 42 are not in fluid communication with one another. When the valve is open as seen in Fig. 2, the poppet 28 is lifted from the valve seat 32, and the inlet 40 and the outlet 42 are in fluid communication with one another.

The present invention provides for an enhanced seal of the annular surface 30 of the poppet 28 against the valve seat 32. The enhanced seal is provided by a dual point seal configuration by which the annular surface 30 of the poppet 28 contacts the valve seat 32 at least at two points.

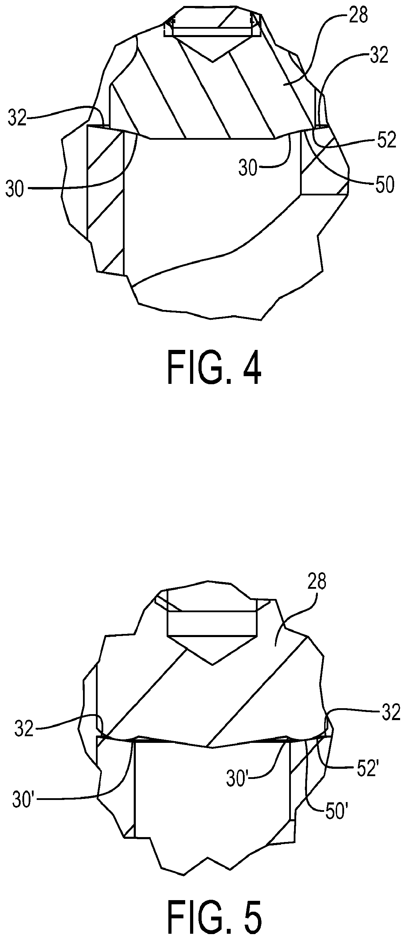

Fig. 4 is a schematic diagram depicting a first close-up cross-sectional view of the portion of the valve designated by the circle arrow "4" in Fig. 3, in the vicinity of the annular surface 30 of the poppet 28 against the valve seat 32, with the valve in the closed position. The annular surface 30 of the poppet 28 is a concave surface for providing a dual point seal against the valve seat 32. Due to the concave shape of the annular surface 30, the poppet 28 has a pair of dual seal points 50 and 52 that form a pair of annular seals when pressed against the valve seat 32. In particular, the annular seal point 50 forms an inner seal surface, and the outer seal point 52 forms an outer seal surface. The seal surfaces thus may be concentric with one another.

The distance between the inner seal point 50 and the outer seal point 52 may be based upon the application for which the valve is being used. For example, the dual point seal allows for variable distance between the sealing points and variable surface area between the two sealing points, which can be controlled by the upper diaphragm retainer. This allows the seal to adjust for cold flow and varying pressures, as well as adjustments as a result of extended cycling. This also allows for variable distances between the two seals for customized applications, which can incorporate more than two sealing points if desired by virtue of the concave shape. The dual point seal configuration additionally optimizes stress levels below material yield, thereby increasing the cycle life of the valve seat and diaphragm. The valve thus can perform effectively, for example, in both clear chemistry and abrasive slurry applications as are known in the art.

Fig. 5 is a schematic diagram depicting a second close-up cross-sectional view of the portion of the valve designated by the circle arrow "4" in Fig. 3, in the vicinity of an annular surface 30' of the poppet 28 and valve seat 32, with the valve in the closed position. The valve portion shown in Fig. 5 forms part of a valve which does not fall within the scope of the invention as claimed. The exemplary valve shown in Fig. 5 has a similar configuration as the embodiment of Fig. 4, except the configuration of the annular surface 30' of Fig. 5 differs from that of annular surface 30 in Fig. 4.

In the valve of Fig. 5, the annular surface 30' of the poppet 28 is a convex surface for providing the dual point seal of the poppet 28 against the valve seat 32. Due to the convex shape of the annular surface 30', the poppet 28 has dual seal points 50' and 52' that form a pair of annular seals when pressed against the valve seat 32. In particular, the annular seal point 50' forms an inner seal surface, and the outer seal point 52' forms an outer seal surface. The seal surfaces thus may be concentric with one another. Comparing the concave dual seal points 50/52 (Fig. 4) to the convex dual seal points 50752', the shape difference results in different relative locations of the dual seal points. The valve of Fig. 5 has comparable advantages to the embodiment of Fig. 4 in that both provide an effective dual point seal.

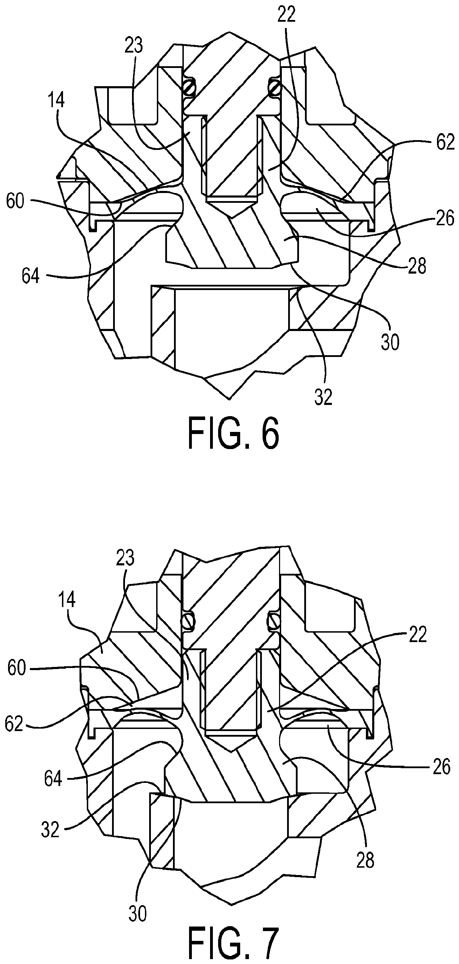

Another feature of the invention is an enhanced web configuration by which the diaphragm will exhibit minimal surface stress without constraint or support from a retainer or body. Fig. 6 is a schematic diagram depicting a close- up cross-sectional view of a portion of the valve designated by the circle arrow "6" in Fig. 2, in the vicinity a web portion with the valve in the open position. Fig. 7 is a schematic diagram depicting a close-up cross-sectional view of a portion of the valve designated by the circle arrow "7" in Fig. 3, in the vicinity a web portion with the valve in the closed position.

As referenced above, the diaphragm 22 has a central stem 23 and a radially outwardly extending web 26. The web 26 may be an extended thin web. The web 26 may be flexible so as to allow the poppet 28 to move between the open and closed positions. Internal pressure of the valve 10 can cause the web 26 to bow or balloon outwards in the direction of the retainer 14 and housing 16. As seen particularly in Figs. 6 and 7, the retainer 14 may include an end surface 60 adjacent to, but in spaced relationship to, the web 26. The end surface 60 is spaced sufficiently from the web 26 such that the web does not contact the end surface 60 when the valve is pressurized and the web is ballooned outward. This allows the web to flex and balloon to a natural position without restraint from the retainer 14, thereby minimizing surface stresses in the diaphragm and web. Such configuration improves over conventional configurations in which the web may contact the retainer as the web balloons under internal pressure, which increases the stress on the diaphragm.

As seen most readily in the valve closed position of Fig. 7, the web is contained in a space 62 between the poppet 28 and the end surface 60 of the retainer 14. As seen in the valve open position of Fig. 6, when the valve is fully actuated with maximum media pressure through the valve, the diaphragm web 26 is permitted to balloon into the space 62, but without contacting the retainer 14. As a result, when the valve is fully stroked, the retainer 14 does not touch a backside 64 of the diaphragm, thereby reducing concentrated stress levels and redistributing stress levels over the entire webbing. Due to this lack of restraint, the diaphragm web is characterized as being a "floating" web, in that the web floats within the space 62 so as not to be constrained by the retainer 14.

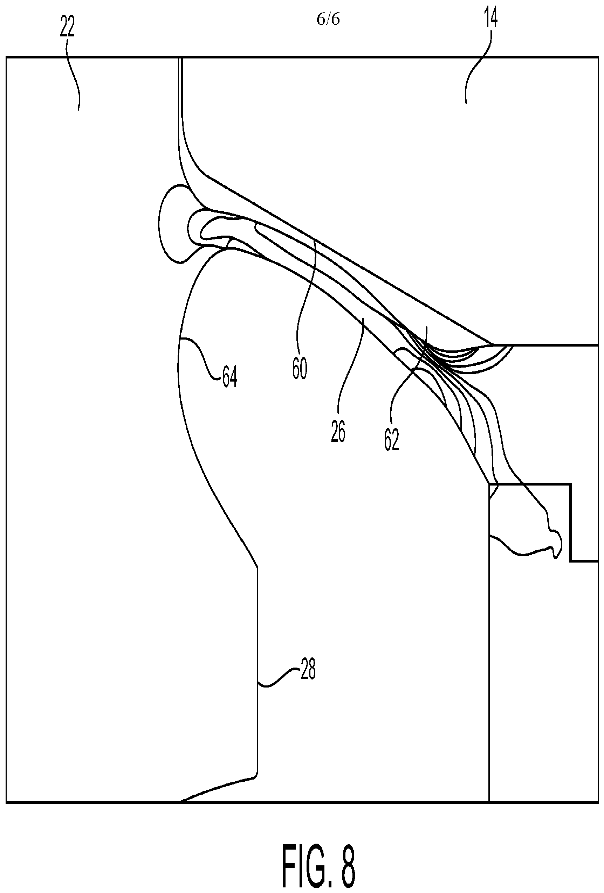

In this regard, Fig. 8 is a schematic diagram that depicts the valve diaphragm and diaphragm web when the web is subjected to internal pressure within the valve. Fig. 8 shows the space 62 between the web 26 and the end surface 60 of the retainer 14. Accordingly, when the valve is fully stroked, the retainer 14 does not touch the backside 64 of the diaphragm, which as referenced above, reduces concentrated stress levels and redistributes stress levels over the entire webbing.

In accordance with the above description, an aspect of the invention is a valve. In exemplary embodiments, the valve includes a valve body having an inlet and an outlet separated by a valve seat, and a diaphragm having a central stem that has a first end coupled to a piston for actuating the valve and a second end that is a poppet for engaging the valve seat to close the valve. The poppet forms a dual point seal with the valve seat having at least two points of contact between an annular surface of the poppet and the valve seat.

In an exemplary embodiment of the valve, the dual point seal includes a pair of point seals that form annular seals when the annular surface of the poppet is pressed against the valve seat.

In an exemplary embodiment of the valve, the pair of point seals includes a pair of concentric point seals between the annular surface of the poppet and the valve seat.

In an exemplary embodiment of the valve, the annular surface of the poppet is a concave surface that provides the dual point seal.

In an exemplary embodiment of the valve, a distance between the two points of contact is a variable distance controlled by a retainer that retains the diaphragm.

In an exemplary embodiment of the valve, the valve further includes a housing enclosing an interior portion of the valve, wherein the housing is coupled to the valve body in a manner that seals the interior portion of the valve with an outer portion of the diaphragm.

In an exemplary embodiment of the valve, the housing is coupled to a retainer and the valve body, and the housing compresses an outer portion of the diaphragm between the valve body and the retainer.

In an exemplary embodiment of the valve, the valve further includes a retainer. The diaphragm further includes a web that extends radially outward from the central stem, and the retainer has a surface adjacent the web, and the surface is spaced apart from the web such that the web does not contact the surface when the valve is pressurized.

In an exemplary embodiment of the valve, the web is a flexible web that balloons outwardly in the direction of the retainer to a natural position when the valve is pressurized, thereby minimizing concentrations of stresses on the web.

In an exemplary embodiment of the valve, the housing is coupled to the retainer and the valve body, and the housing compresses an outer portion of the diaphragm between the valve body and the retainer.

In exemplary embodiments of the valve, the valve includes a valve body having an inlet and an outlet separated by a valve seat; a diaphragm including a central stem that has a first end coupled to a piston for actuating the valve and a second end that has an annular surface for engaging the valve seat to close the valve, and a web that extends radially outward from the central stem; and a retainer. The retainer has a surface adjacent the web, and the surface of the retainer is spaced apart from the web such that the web does not contact the surface of the retainer when the valve is pressurized.

In an exemplary embodiment of the valve, the web is a flexible web that balloons outwardly in the direction of the retainer to a natural position when the valve is pressurized, thereby minimizing concentrations of stresses on the web.

In an exemplary embodiment of the valve, the valve further includes a housing enclosing an interior portion of the valve, wherein the housing is coupled to the valve body in a manner that seals the interior portion of the valve with an outer portion of the diaphragm. In an exemplary embodiment of the valve, the housing is coupled to the retainer and the valve body, and the housing compresses an outer portion of the diaphragm between the valve body and the retainer.

## Claims

1. A valve (10) comprising:
a valve body (12) having an inlet (40) and an outlet (42) separated by a valve seat (32), and
a diaphragm (22) comprising a central stem (23) that has a first end coupled to a piston (20) for actuating the valve, and a second end that comprises a poppet (28) for engaging the valve seat to close the valve, the poppet having an annular sealing surface (30) adapted to seal against the valve seat,
**characterised in that** the annular sealing surface of the poppet is concave and arranged so that, when engaging the valve seat to close the valve, a pair of concentric annular seals (50, 52) are formed by the concave annular surface of the poppet.

2. The valve (10) of claim 1, in which a distance between the two concentric annular seals (50, 52) is a variable distance controlled by a retainer (14) that retains the diaphragm (22).

3. The valve (10) of claim 1 or claim 2, which includes a housing (16) enclosing an interior portion of the valve, in which the housing is coupled to the valve body (12) in a manner that seals the interior portion of the valve with an outer portion of the diaphragm (22).

4. The valve (10) of claim 3, in which the housing (16) is coupled to a retainer (14) and the valve body (12), and the housing compresses an outer portion of the diaphragm (22) between the valve body and the retainer.

5. The valve (10) of claim 1 or claim 2, which includes a retainer (14), in which the diaphragm (22) further comprises a web (26) that extends radially outward from the central stem (23), and the retainer has a surface (60) adjacent the web, and the surface is spaced apart from the web such that the web does not contact the surface when the valve is pressurized.

6. The valve (10) of claim 5, in which the web (26) is a flexible web that balloons outwardly in the direction of the retainer (14) to a natural position when the valve is pressurized, thereby minimizing concentrations of stresses on the web.

7. The valve (10) of claim 5 or claim 6, which includes a housing (16) enclosing an interior portion of the valve, in which the housing is coupled to the valve body (12) in a manner that seals the interior portion of the valve with an outer portion of the diaphragm (22).

8. The valve (10) of claim 7, in which the housing (16) is coupled to the retainer (14) and the valve body (12), and the housing compresses an outer portion of the diaphragm (22) between the valve body and the retainer.

## Patentansprüche

1. Ventil (10), umfassend:
einen Ventilkörper (12), der einen Einlass (40) und einen Auslass (42), die von einem Ventilsitz (32) voneinander getrennt sind, und eine Membran (22) hat, die einen zentralen Schaft (23) umfasst, der ein erstes Ende hat, das mit einem Kolben (20) zum Betätigen des Ventils gekoppelt ist, und ein zweites Ende hat, das einen Teller (28) umfasst, um zum Schließen des Ventils mit dem Ventilsitz in Eingriff zu kommen, wobei der Teller eine ringförmige Dichtungsoberfläche (30) hat, die dazu angepasst ist, gegen den Ventilsitz in dichtenden Eingriff zu kommen,
**dadurch gekennzeichnet, dass** die ringförmige Dichtungsoberfläche des Tellers konkav und so angeordnet ist, dass, wenn sie mit dem Ventilsitz in Eingriff kommt, um das Ventil zu schließen, ein Paar konzentrischer ringförmiger Dichtungen (50, 52) durch die konkave ringförmige Oberfläche des Tellers ausgebildet werden.

2. Ventil (10) gemäß Anspruch 1, wobei ein Abstand zwischen den beiden konzentrischen ringförmigen Dichtungen (50, 52) ein variabler Abstand ist, der von einer Halteeinrichtung (14) gesteuert wird, die die Membran (22) festhält.

3. Ventil (10) gemäß Anspruch 1 oder Anspruch 2, das ein Gehäuse (16) aufweist, das einen inneren Teil des Ventil einschließt, wobei das Gehäuse mit dem Ventilkörper (12) in einer Weise gekoppelt ist, die den inneren Teil des Ventils mit einem äußeren Teil der Membran (22) abdichtet.

4. Ventil (10) gemäß Anspruch 3, wobei das Gehäuse (16) mit einer Halteeinrichtung (14) und dem Ventilkörper (12) gekoppelt ist, und das Gehäuse einen äußeren Teil der Membran (22) zwischen dem Ventilkörper und der Halteeinrichtung zusammendrückt.

5. Ventil (10) gemäß Anspruch 1 oder Anspruch 2, das eine Halteeinrichtung (14) aufweist, wobei die Membran (22) ferner einen Balg (26) umfasst, der sich von dem mittleren Schaft (23) aus radial nach außen erstreckt, und die Halteeinrichtung eine Oberfläche (60) hat, die dem Balg benachbart ist, und die Oberfläche von dem Balg beabstandet ist, sodass der Balg mit der Oberfläche nicht in Kontakt ist, wenn das Ventil mit Druck beaufschlagt ist.

6. Ventil (10) gemäß Anspruch 5, wobei der Balg (26) ein flexibler Balg ist, der sich in der Richtung der Halteeinrichtung (14) in eine natürliche Position nach außen wölbt, wenn das Ventil mit Druck beaufschlagt ist, wodurch auf den Balg wirkende Konzentrationen von Spannungen minimiert werden.

7. Ventil (10) gemäß Anspruch 5 oder Anspruch 6, das ein Gehäuse (16) aufweist, das einen inneren Teil des Ventils einschließt, wobei das Gehäuse mit dem Ventilkörper (12) in einer Weise gekoppelt ist, die den inneren Teil des Ventils mit einem äußeren Teil der Membran (22) abdichtet.

8. Ventil (10) gemäß Anspruch 7, wobei das Gehäuse (16) mit der Halteeinrichtung (14) und dem Ventilkörper (12) gekoppelt ist, und das Gehäuse einen äußeren Teil der Membran (22) zwischen dem Ventilkörper und der Halteeinrichtung zusammendrückt.

## Revendications

1. Soupape (10) comprenant :
un corps de soupape (12) ayant une entrée (40) et une sortie (42) séparées par un siège de soupape (32), et un diaphragme (22) comprenant une tige centrale (23) qui a une première extrémité couplée à un piston (20) pour actionner la soupape, et une deuxième extrémité qui comprend un champignon (28) pour s'engager avec le siège de soupape pour fermer la soupape, le champignon ayant une surface d'étanchéité annulaire (30) adaptée pour assurer l'étanchéité contre le siège de soupape,
**caractérisée en ce que** la surface d'étanchéité annulaire du champignon est concave et agencée de sorte que, lors de l'engagement du siège de soupape pour fermer le clapet, une paire de joints d'étanchéité annulaires concentriques (50, 52) soient formés par la surface annulaire concave du champignon.

2. Soupape (10) de la revendication 1, dans laquelle une distance entre les deux joints d'étanchéité annulaires concentriques (50, 52) est une distance variable commandée par un élément de retenue (14) qui retient le diaphragme (22).

3. Soupape (10) de la revendication 1 ou 2, qui comporte un boîtier (16) renfermant une partie intérieure de la soupape, où le boîtier est couplé au corps de soupape (12) de manière à assurer l'étanchéité de la partie intérieure de la soupape avec une partie extérieure du diaphragme (22).

4. Soupape (10) de la revendication 3, dans laquelle le boîtier (16) est couplé à un élément de retenue (14) et au corps de soupape (12), et le boîtier comprime une partie extérieure du diaphragme (22) entre le corps de soupape et l'élément de retenue.

5. Soupape (10) de la revendication 1 ou 2, qui comporte un élément de retenue (14), où le diaphragme (22) comprend en outre une bande (26) qui s'étend radialement vers l'extérieur depuis la tige centrale (23), et l'élément de retenue a une surface (60) adjacente à la bande, et la surface est espacée de la bande de sorte que la bande ne soit pas en contact avec la surface lorsque la soupape est sous pression.

6. Soupape (10) de la revendication 5, dans laquelle la bande (26) est une bande flexible qui se gonfle vers l'extérieur dans la direction de l'élément de retenue (14) à une position naturelle lorsque la soupape est sous pression, minimisant ainsi les concentrations de contraintes sur la bande.

7. Soupape (10) de la revendication 5 ou 6, qui comporte un boîtier (16) renfermant une partie intérieure de la soupape, où le boîtier est couplé au corps de soupape (12) de manière à assurer l'étanchéité de la partie intérieure de la soupape avec une partie extérieure du diaphragme (22).

8. Soupape (10) de la revendication 7, dans lequel le boîtier (16) est couplé à l'élément de retenue (14) et au corps de soupape (12), et le boîtier comprime une partie extérieure du diaphragme (22) entre le corps de soupape et l'élément de retenue.
